# EUROPÄISCHE PATENTANMELDUNG

(11) **EP 0 901 973 A1**
(43) Veröffentlichungstag der Anmeldung: **17.03.1999**
(21) Anmeldenummer: 98115675.5
(22) Anmeldetag: 20.08.1998
(51) Int. Cl.: B65G 21/20, B65G 15/58

(54) **Höhenförderer**

(30) Priorität: 10.09.1997 DE 19739660
(71) Anmelder: BiPro GmbH Entwicklung und Fertigung von Prototypen und Kleinserien, 33649 Bielefeld (DE)
(72) Erfinder: Schwarze, Hans-Jochen, 33649 Bielefeld (DE)
(74) Vertreter: Hanewinkel, Lorenz, Dipl.-Phys.

(57) **Zusammenfassung**

Der Höhenförderer für Waren der verschiedensten Art und mit unterschiedlichen Dicken weist ein in vertikaler Ebene endlos umlaufendes Transportband (1) und mehrere dessem Fördertrum (1a) zugeordnete, die Waren (W) gegen das Fördertrum (1a) zur Mitnahme drückende und die Warendicken (D) ausgleichende flexible und/oder elastische Lamellen (2) auf.

Dabei sind dem Fördertrum (1a) in Förderrichtung (F) mehrere übereinander vorgesehene Lamellen (2) zugeordnet, welche unter Vorspannung in Richtung Fördertrum (1a) gehalten sind.

Die Lamellen (2) sind mit einem Ende in Haltern (3) festgelegt, bogenförmig nach oben in Richtung Fördertrum (1) vorgespannt und überlappen sich mit ihren freien, fördertrumseitigen Enden (2a).

## Beschreibung

Die Erfindung bezieht sich auf einen Höhenförderer für Waren der verschiedensten Art und mit unterschiedlichen Dicken, insbesondere für Tabakwaren, Süßigkeiten, Hygieneartikel o. dgl.

Aufgabe der Erfindung ist es, einen einfach und kostengünstig aufgebauten und sicher arbeitenden Höhenförderer als Zusatzgerät für Waren beinhaltende Lager- und Ausgabeautomaten zu schaffen, mit dem eine Förderung von unterschiedlich dicken Waren bei automatisch erfolgendem Dickenausgleich möglich ist.

Diese Aufgabe wird durch ein in vertikaler Ebene endlos umlaufendes Transportband und mehrere, dessen Fördertrum zugeordnete, die Waren gegen das Fördertrum zur Mitnahme drückende und die Warendicken ausgleichende, flexible und/oder elastische Lamellen gelöst.

Vorteilhafte Weiterbildungen der Aufgabenlösung sind in den Unteransprüchen enthalten.

Der Höhenförderer gemäß der Erfindung ermöglicht das störungsfreie Höhenfördern von Waren der verschiedensten Art und mit unterschiedlichen Dicken, und dieser Höhenförderer gleicht aufgrund seiner Konstruktion die unterschiedlichen Warendicken automatisch aus.

Dabei besteht dieser Höhenförderer aus einem vertikalen endlos umlaufenden Transportband und diesem zugeordneten, flexiblen und/oder elastischen Lamellen, vorzugsweise aus Kunststoff vorgespannten Lamellen, die mit ihrem freien Lamellenende in Richtung Fördertrum zeigen und zwischen sich und dem fördernden Trum des vertikalen Transportbandes die Waren gegen das Fördertrum drücken, so daß die Mitnahme der Waren durch das Fördertrum erfolgt.

Die flexiblen Lamellen geben gegenüber dem Fördertrum entsprechend der Warendicke mehr oder weniger nach und bilden somit mit dem Fördertrum einen flexibel, in der Dicke sich verändernden Förderkanal.

Mit diesem Höhenförderer werden Waren aus einer horizontalen Zuführebene in sicherer Weise vertikal gefördert, ohne dabei eine Einstellung der Warendicken vorzunehmen, sondern dieses erfolgt automatisch durch die nachgiebigen Lamellen.

Dieser Höhenförderer ist insbesondere als Zusatzgerät für Lager- und Ausgabeautomaten mit Waren ausgeführt und kann in den verschiedensten Verkaufsräumen diesen Automaten zugeordnet werden.

Auf den Zeichnungen ist ein Ausführungsbeispiel dargestellt, welches nachfolgend näher erläutert wird. Es zeigt:
- Fig. 1: eine schematische Seitenansicht eines Höhenförderers mit vertikalem Transportband, diesem zugeordneten Lamellen und einem vorgeschalteten horizontalen Zuführband mit angeschlossenen Überführrollen,
- Fig. 2: eine schematische Seitenansicht eines Teilbereiches des Höhenförderers mit zwischen Transportband und Lamellen transportierten, unterschiedlich dicken Waren,

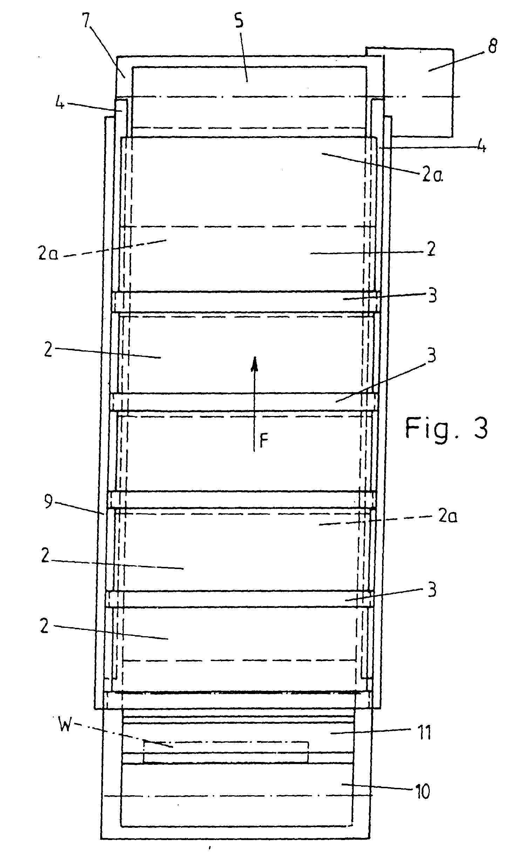

- Fig. 3: eine schematische Vorderansicht des Höhenförderers mit Transportband mit Antrieb und zugeordneten Lamellen sowie vorgeschaltetem Zuführband.

Der Höhenförderer für Waren (W) der verschiedensten Art und mit unterschiedlichen Dicken (D), insbesondere Tabakwaren (Zigarettenpackungen, Tabakpackungen, Packungen mit Zigarettenpapierblättchen), Süßigkeiten (Schokoladentafeln, Bonbontüten usw.), Hygieneartikel (Papiertaschentücher-Packungen, Brillenputztücher-Packungen usw.) weist ein in vertikaler Ebene endlos umlaufendes Transportband (1) und mehrere dessem Fördertrum (1a) zugeordnete, die Waren (W) gegen das Fördertrum (1a) zur Mitnahme drückende und die Warendicken (D) ausgleichende, flexible und/oder elastische Lamellen (2) auf. Die Lamellen (2) bilden zwischen sich und dem Fördertrum (1a) einen in der Dicke sich flexibel verändernden Förderkanal.

Dem Fördertrum (1a) sind in Förderrichtung (F) mehrere, übereinander vorgesehene Lamellen (2) zugeordnet, welche unter Vorspannung in Richtung Fördertrum (1a) gehalten sind.

Die Lamellen (2) sind jeweils mit einem Ende in einem Halter (3) festgelegt, bogenförmig nach oben in Richtung Fördertrum (1a) vorgespannt und überlappen sich mit ihren freien, fördertrumseitigen Enden (2a).

Die Lamellen (2) stützen sich mit ihrem freien Ende (2a) unter Bildung eines Spaltes (S) zum Fördertrum (1a) an seitlichen in Förderrichtung (F) verlaufenden Abstandshalteschienen (4) ab.

Die Lamellen (2) erstrecken sich über die gesamte Breite des Transportbandes (1); die Lamellen (2) bestehen aus Kunststoff, vorzugsweise durchscheinendem Kunststoff und sind in dünnwandiger Blattform mit ausreichender Eigensteifheit zur Biegung und Vorspannung sowie zum Dickenausgleich (Nachgeben) ausgebildet.

Das Transportband (1) lagert mit seinen beiden Umlenkrollen (5, 6) in einem Grundrahmen (7) und die obere Umlenkrolle (5) ist mit einem das Fördertrum (1a) in Förderrichtung (F) ziehenden motorischem Antrieb (8) verbunden.

Die Kalter (3) für die Lamellen (2) lassen sich von U-Bügeln bilden und sind in einem am Grundrahmen (7) lösbar befestigten Halterrahmen (9) im Höhenabstand lösbar festgelegt.

Die beiden seitlichen Abstandshalteschienen (4) sind im Grundrahmen (7) befestigt.

Dem vertikalen Transportband (1) ist ein horizontales Zuführband (10) für die Waren (W) vorgeschaltet und im Übergangsbereich vom horizontalen Zuführband (10) zum vertikalen Transportband (1) sind angetriebene, einen Waren-Umlenkbogen bildende Führungsrollen (11) angeordnet.

Die anzugebenden Waren (W) werden aus dem Lagerbereich durch das Zuführband (10) und die umlenkenden Führungsrollen (11) dem Höhenförderer übergeben, wo sie zwischen dem Fördertrum (1a) und den sich an die Warendicke stufenlos anpassenden Lamellen (2) nach oben gefördert werden, wobei durch die Andruckkraft der Lamellen (2) die Waren (W) gegen das Fördertrum (1a) gehalten und von diesem nach oben mitgenommen werden.

Durch die sich in Höhenrichtung überlappenden Lamellen (2) wird eine unterbrechungslose Anlage der Lamellen (2) an den verschiedenen Waren gewährleistet.

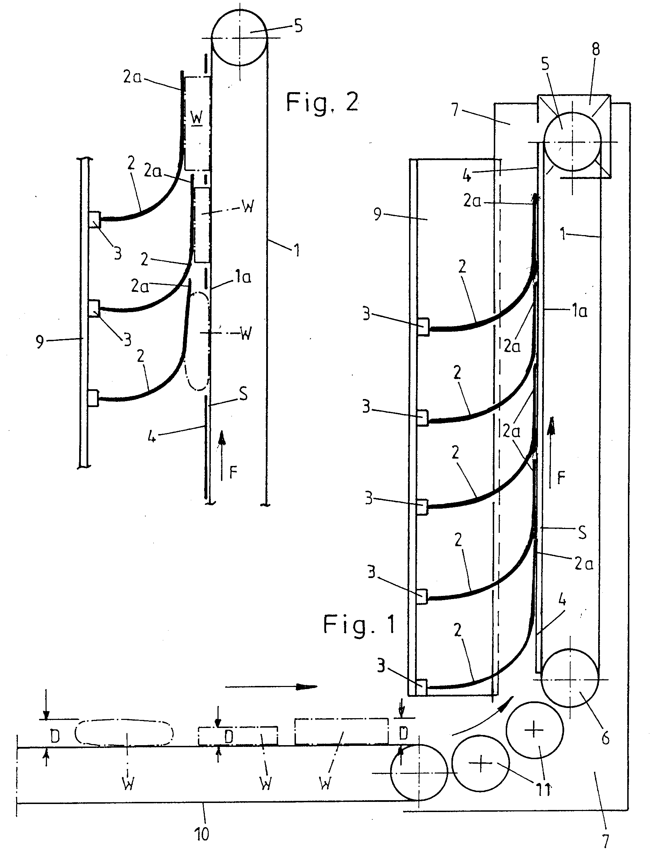

In Fig. 1 und 2 sind unterschiedlich dicke Waren (W) gezeigt, beim Höhenfördern fallen immer Artikel gleicher Dicke aus einem Lager- und Ausgabebereich oder je nach Kundenwunsch unterschiedlich dicke Waren (W) nacheinander aus verschiedenen Lager- und Ausgabebereichen an.

## Patentansprüche

1. Höhenförderer für Waren der verschiedensten Art und mit unterschiedlichen Dicken,
gekennzeichnet durch ein in vertikaler Ebene endlos umlaufendes Transportband (1) und mehrere dessem Fördertrum (1a) zugeordnete, die Waren (W) gegen das Fördertrum (1a) zur Mitnahme drückende und die Warendicken (D) ausgleichende flexible und/oder elastische Lamellen (2).

2. Höhenförderer nach Anspruch 1, dadurch gekennzeichnet, daß dem Fördertrum (1a) in Förderrichtung (F) mehrere übereinander vorgesehene Lamellen (2) zugeordnet sind, welche unter Vorspannung in Richtung Fördertrum (1a) gehalten sind.

3. Höhenförderer nach Anspruch 1 oder 2, dadurch gekennzeichnet, daß die Lamellen (2) mit einem Ende in Haltern (3) festgelegt sind, bogenförmig nach oben in Richtung Fördertrum (1a) vorgespannt sind und sich mit ihren freien, fördertrumseitigen Enden (2a) überlappen.

4. Höhenförderer nach einem der Ansprüche 1 bis 3, dadurch gekennzeichnet, daß sich die Lamellen (2) mit ihrem freien Ende (2a) unter Bildung eines Spaltes (S) zum Fördertrum (1a) an seitlichen, in Förderrichtung (F) verlaufenden Abstandshalteschienen (4) abstützen.

5. Höhenförderer nach einem der Ansprüche 1 bis 4, dadurch gekennzeichnet, daß die Lamellen (2) sich über die gesamte Breite des Transportbandes (1) erstrecken und mit dem Fördertrum (1a) einen flexibel veränderbaren Förderkanal bilden.

6. Höhenförderer nach einem der Ansprüche 1 bis 5, dadurch gekennzeichnet, daß die Lamellen (2) aus Kunststoff bestehen und in dünnwandiger Blattform ausgebildet sind.

7. Höhenförderer nach einem der Ansprüche 1 bis 6, dadurch gekennzeichnet, daß das Transportband (1) mit seinen beiden Umlenkrollen (5, 6) in einem Grundrahmen (7) gelagert und die obere Umlenkrolle (5) mit einem das Fördertrum (1a) in Förderrichtung (F) ziehenden Antrieb (8) verbunden ist.

8. Höhenförderer nach einem der Ansprüche 1 bis 7, dadurch gekennzeichnet, daß die Kalter (3) für die Lamellen (2) von U-Bügeln gebildet und in einem am Grundrahmen (7) lösbar befestigten Halterrahmen (9) lösbar festgelegt sind.

9. Höhenförderer nach einem der Ansprüche 1 bis 8, dadurch gekennzeichnet, daß die Abstandshalteschienen (4) im Grundrahmen (7) befestigt sind.

10. Höhenförderer nach einem der Ansprüche 1 bis 9, dadurch gekennzeichnet, daß dem vertikalen Transportband (1) ein horizontales Zuführband (10) für die Waren (W) vorgeschaltet ist und im Übergangsbereich vom horizontalen Zuführband (10) zum vertikalen Transportband (1) angetriebene, einen Waren-Umlenkbogen bildende Übergaberollen (11) angeordnet sind.
